Europäisches Patentamt

European Patent Office

Office européen des brevets

(11) Numéro de publication: **0 234 155**
**A1**

(12) **DEMANDE DE BREVET EUROPEEN**

(21) Numéro de dépôt: **86402872.5**

(51) Int. Cl.4: **F16D 3/84**

(22) Date de dépôt: **19.12.86**

(30) Priorité: **20.12.85 FR 8518951**

(43) Date de publication de la demande:
**02.09.87 Bulletin 87/36**

(84) Etats contractants désignés:
**BE DE ES FR GB IT NL SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Botti, Jean-Joseph**
**1, Allée des Acacias**
**F-92360 Meudon la Foret(FR)**
Inventeur: **Francois, Jean**
**2, rue de la Grenouillère Elancourt**
**F-78310 Maurepas(FR)**

(74) Mandataire: **Chassagnon, Jean-Alain et al**
**REGIE NATIONALE DES USINES RENAULT**
**(S.0804)**
**F-92109 Boulogne-Billancourt Cedex(FR)**

(54) Dispositif de montage d'un soufflet, notamment pour transmission.

(57) Dispositif de montage d'un soufflet (1), notamment pour transmission comportant un serrage par collier (2, 3) sur chacune des extrémités (4, 5) dudit soufflet (1), qui se monte respectivement sur le bol - (6) et sur l'arbre de transmission (7), caractérisé en ce qu'il comprend au moins un système antirotation sur une extrémité (4, 5) dudit soufflet (1) associé au système d'étanchéité correspondant.

FIG.1

EP 0 234 155 A1

## DISPOSITIF DE MONTAGE D'UN SOUFFLET, NOTAMMENT POUR TRANSMISSIONS.

La présente invention se rapporte à un dispositif de montage d'un soufflet, notamment pour transmissions de véhicule automobile.

Les dispositifs d'articulation de transmission doivent posséder un soufflet de protection, qui permet d'assurer l'étanchéité du mécanisme. L'accrochage des soufflets par collier de serrage répond à ce problème. Cependant, il se produit des rotations des soufflets par rapport aux pièces sur lesquelles ils se montent. Cette rotation se manifeste lors du comportement du véhicule, et notamment au démarrage à froid. Ce phénomène de rotation est engendré par les vitesses différentielles entre les plis des petits et des grands diamètres. Cette rotation présente ainsi l'inconvénient de diminuer ou même de supprimer l'étanchéité recherchée.

Le but de le présente invention est de proposer un dispositif de montage d'un soufflet pour transmissions, qui s'oppose à toute rotation relative dudit soufflet par rapport aux pièces sur lesquelles il se fixe.

Selon un mode de réalisation de l'invention, le dispositif de montage d'un soufflet pour transmission comportant un serrage par collier sur chacune des extrémités dudit soufflet, qui se monte respectivement sur le bol et sur l'arbre de transmission, comprend au moins un système anti-rotation sur une des extrémités dudit soufflet ; ledit système étant associé au système d'étanchéité correspondant.

Selon un mode de réalisation de l'invention, le système anti-rotation consiste en des dentelures qui sont aménagées sur le bol ou sur l'arbre de transmission, et qui coopèrent avec l'extrémité correspondante du soufflet.

Selon un mode de réalisation de l'invention, les dentelures sont réalisées dans une zone qui est voisine des gorges d'étanchéité.

Le dispositif de montage selon l'invention permet ainsi de garantir l'étanchéité en évitant toute rotation relative du soufflet par rapport aux pièces sur lesquelles il se fixe. De plus le dispositif de montage selon l'invention offre l'avantage de présenter une grande simplicité de réalisation et cela sans utilisation de pièces supplémentaires.

D'autres caractéristiques et avantages de la présente invention ressortiront de la description qui suit de mode de réalisation donné à titre d'exemple en référence aux dessins annexés sur lesquels :

-la figure 1 est une vue longitudinale en demi-coupe du dispositif selon l'invention ;

-la figure 2 est une vue en coupe partielle correspondant à la figure 1 du détail du montage sur le bol selon un premier mode de réalisation de l'invention ;

-la figure 3 est une vue correspondante à la figure 1 du détail du montage sur l'arbre selon un mode de réalisation de l'invention ;

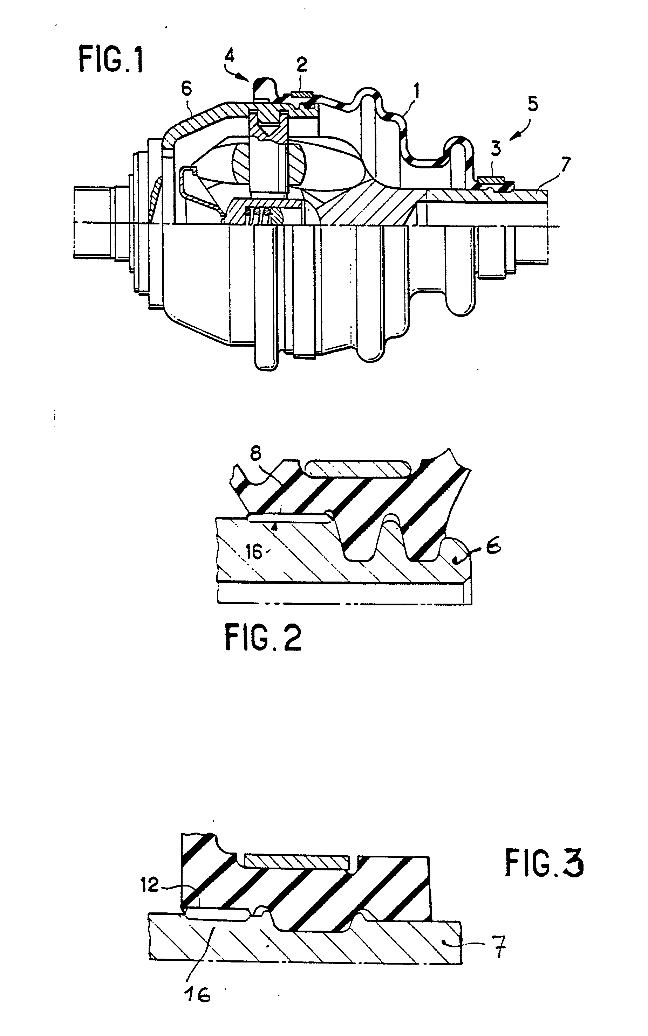

Le dispositif de montage d'un soufflet 1 s'applique notamment à une transmission qui est représentée sur la figure 1. Ce dispositif comporte un serrage par un collier 2 sur l'extrémité 4 dudit soufflet 1, et un serrage par un collier 3 sur l'autre extrémité 5 du soufflet 1. Ce soufflet 1 se monte respectivement sur un bol 6, et sur l'arbre de transmission 7. Le dispositif selon l'invention prévoit un système antirotation sur chacune des extrémités 4 et 5 du soufflet 1. Ces systèmes antirotation sont associés chacun au système d'étanchéité correspondant.

Selon un mode de réalisation de l'invention, le système antirotation consiste en des dentelures qui sont aménagées sur le bol 6 ou sur l'arbre de transmission 7. Ces dentelures coopèrent avec l'extrémité 4 ou 5 correspondante du soufflet 1, de manière à garantir la fixation dudit soufflet 1 par rapport au bol 6 et à l'arbre de transmission 7 lorsque les colliers de serrage 2 et 3 sont mis en place.

Les dentelures peuvent être obtenues par moletage. La figure 2 montre un mode de réalisation de l'invention dans laquelle les dentelures 8 sont réalisées dans une zone 16, qui est voisine des gorges d'étanchéité 18 du bol 6.

La figure 3 représente un mode de réalisation de l'invention, dans laquelle des dentelures 12 sont réalisées dans une zone qui est voisine de la gorge d'étanchéité sur l'arbre de transmission 7.

## Revendications

1. Dispositif de montage d'un soufflet (1), notamment pour transmission comportant un serrage par collier (2, 3) sur chacune des extrémités (4, 5) dudit soufflet (1), qui se monte respectivement sur le bol (6) et sur l'arbre de transmission (7), caractérisé en ce qu'il comprend au moins un système antirotation sur une extrémité (4, 5) dudit soufflet (1) associé au système d'étanchéité correspondant, le système antirotation consistant en des dentelures qui sont aménagées sur le bol (6) ou sur l'arbre de transmission (7), et qui coopèrent avec l'extrémité correspondante du soufflet (1), les dentelures étant réalisées dans une zone (16) qui est voisine des gorges d'étanchéité (18).

2. Dispositif de montage selon la revendication 1, caractérisé en ce que les dentelures sont obtenues par moletage.

FIG.1

6

4

2

1

5

3

7

FIG.2

8

16

6

FIG.3

12

16

7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X | FR-A-2 572 478 (GLAENZER SPICER) * En entier * | 1 | F 16 D 3/84 |
| X | FR-A-2 172 580 (GLAENZER SPICER) * Page 5, lignes 17-19; figures 4,5 * | 1 | |
| A | EP-A-0 093 937 (GROVE) | | |
| A | FR-A-2 073 671 (G.K.N.) | | |

**DOMAINES TECHNIQUES RECHERCHES (Int. Cl.4)**

F 16 D
F 16 J
F 16 C

Le présent rapport de recherche a été établi pour toutes les revendications

| Lieu de la recherche | Date d'achèvement de la recherche | Examinateur |
|---|---|---|
| LA HAYE | 27-03-1987 | ORTHLIEB CH.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82